# EUROPÄISCHE PATENTANMELDUNG

(11) **EP 2 933 163 A2**
(43) Veröffentlichungstag der Anmeldung: **21.10.2015**
(21) Anmeldenummer: 14179802.5
(22) Anmeldetag: 05.08.2014
(51) Int. Cl.: B60W 50/14, B60K 37/06

(54) **Verfahren und Vorrichtung zum Betreiben eines Fahrzeugs, Computerprogramm, Computer-Programmprodukt**

(30) Priorität: 03.09.2013 DE 102013217482
(71) Anmelder: ROBERT BOSCH GMBH, 70442 Stuttgart (DE)
(72) Erfinder: Kniep, Stefan Andreas, 31134 Hildesheim (DE); Fuchs, Hendrik, 31141 Hildesheim (DE)

(57) **Zusammenfassung**

Die Erfindung betrifft ein Verfahren zum Betreiben eines Fahrzeugs, insbesondere Kraftfahrzeugs, das wenigstens eine Anzeigeeinrichtung (2) zum visuellen oder akustischen Anzeigen wenigstens einer von einem Benutzer auswählbaren Funktion des Fahrzeugs aufweist, mit folgenden Schritten:
- Erfassen mehrerer von dem Benutzer ausgewählten Funktionen,
- Erfassen einer bei Auswahl der jeweiligen Funktion vorliegenden aktuellen Fahrsituation des Fahrzeugs,
- Speichern der erfassten und ausgewählten Funktionen in Abhängigkeit von der jeweiligen Fahrsituation,
- Ermitteln eines Zusammenhangs zwischen wenigstens einer Fahrsituation und den gespeicherten und ausgewählten Funktionen,
- Anzeigen der wenigstens einen auswählbaren Funktion in Abhängigkeit von der aktuellen Fahrsituation und des ermittelten Zusammenhangs.

## Beschreibung

Die Erfindung betrifft ein Verfahren zum Betreiben eines Fahrzeugs, insbesondere Kraftfahrzeugs, das wenigstens eine Anzeigevorrichtung zum visuellen oder akustischen Anzeigen wenigstens einer von einem Benutzer auswählbaren Funktion des Fahrzeugs aufweist.

Ferner betrifft die Erfindung eine entsprechende Vorrichtung sowie ein Computerprogramm und ein Computer-Programmprodukt.

### Stand der Technik

Verfahren und Vorrichtungen der Eingangs genannten Art sind aus dem Stand der Technik bekannt. Bediensysteme eines Fahrzeugs ermöglichen es dem Fahrer oder einem Beifahrer (Benutzer), die Funktionen der im Fahrzeug zur Verfügung stehenden Systeme, wie beispielsweise Fahrerinformations- oder Fahrerassistenzsysteme zu nutzen, und individuelle Einstellungen vorzunehmen. Die Fülle der zur Verfügung stehenden Systeme und der entsprechenden Funktionen macht es schwierig, die Bedienung dieser Systeme einfach und übersichtlich zu gestalten. Oft ist der Benutzer dazu gezwungen, sich durch mehrere Untermenüs zu navigieren, um eine gewünschte Funktion zu finden und aktivieren zu können. Für manche Fahrer stellt auch die Vielzahl der zur Verfügung stehenden Bedienelemente ein Problem dar.

Zum Verbessern der oben genannten Situation sind unterschiedliche Ansätze bereits bekannt. Zum einen werden alternative Eingabegeräte, wie beispielsweise der BMW-iDrive-Controller oder sogenannten Touchpads verwendet, um die Anzahl der Tasten zu reduzieren, und um dem Benutzer einen intuitiven Zugang zu den zur Verfügung stehenden Funktionen zu bieten. Dabei werden üblicherweise zur Verfügung stehende Funktionen in verschiedene Kategorien eingeteilt, damit der Fahrer eine gewünschte Funktion leichter auffinden kann. Außerdem gibt es kontextabhängige Bediensysteme, welche Funktionen abhängig vom Bedienkontext ein- oder ausblenden und die Belegung der Tasten/Eingabeelemente des Fahrzeugbediensystems dem Bedienkontext anpassen. Weiterhin ist es bekannt, einige Funktionen automatisch zu aktivieren, um die Anzahl der durch den Fahrer vorzunehmenden Eingaben zu minimieren, wie beispielsweise eine automatische Scheibenwischer- oder Lichtansteuerung.

Aus der US 7,451,845 B2 ist außerdem ein System bekannt, bei welchem dem Fahrer vorgeschlagen wird, Fahrzeugeinstellungen zu ändern, wobei diese Vorschläge nur auf Basis des aktuellen Fahrzeugzustands gemacht werden. Weiterhin ist aus der US 6,449,572 B1 ein Verfahren bekannt, bei welchem während der Fahrt Statistiken über den Fahrstil, auch in Abhängigkeit von der Witterung und dem Fahrerzustand, erstellt werden, und bei welchem Fahrzeugeinstellungen in Abhängigkeit von diesen Statistiken automatisch geändert werden.

### Offenbarung der Erfindung

Das erfindungsgemäße Verfahren mit den Merkmalen des Anspruchs 1 hat den Vorteil, dass fahrsituationsbedingt dem Benutzer wenigstens eine, vorteilhafterweise mehrere Funktionen angezeigt werden, die ihm zur Verfügung stehen, wobei die wenigstens eine angezeigte Funktion in einem zuvor ermittelten Zusammenhang mit der Fahrsituation steht, so dass es sich bei der wenigstens einen angezeigten Funktion um eine Funktion handelt, die der Fahrer wahrscheinlich auswählen möchte. Es wird also ein fahrsituationsabhängiges Antizipieren einer Funktionsauswahl durchgeführt, wodurch dem Fahrer nur die Funktion oder Funktionen angezeigt werden, die er wahrscheinlich benötigt oder erfahrungsgemäß in einer derartigen Fahrsituation auswählen würde. Erfindungsgemäß ist hierzu vorgesehen, dass zunächst während des normalen Fahrzeugbetriebs die von dem Benutzer ausgewählten Funktionen erfasst werden. Gleichzeitig wird die bei der Auswahl der jeweiligen Funktion vorliegende Fahrsituation erfasst. Die erfasste ausgewählte Funktion wird mit der jeweils erfassten Fahrsituation gespeichert. Auf Basis dieser gespeicherten Daten wird ein möglicher Zusammenhang zwischen der jeweiligen Fahrsituation und der gespeicherten und ausgewählten Funktion bezüglich der jeweiligen Fahrsituation ermittelt. Dies kann beispielsweise durch Erfassen der Häufigkeit ausgewählter Funktionen in einer bestimmten Fahrsituation erfolgen. Anschließend wird in Abhängigkeit von der aktuellen Fahrsituation wenigstens eine zur Verfügung stehende beziehungsweise auswählbare Funktion in Abhängigkeit von dem ermittelten Zusammenhang dargestellt. So wird beispielsweise die am häufigsten gewählte Funktion bezüglich einer bestimmten Fahrsituation, die der aktuellen Fahrsituation entspricht, dargestellt. Mit der Zeit beziehungsweise mit ansteigender Anzahl der erfassten Daten im Betrieb des Fahrzeugs wird das Verfahren automatisch optimiert. Im Zusammenhang mit der Erfindung ist unter einer Fahrsituation nicht nur der Zustand und/oder beispielsweise die geografische Verordnung des Fahrzeugs zu verstehen, sondern auch ein Zustand und/oder Verhalten des Fahrers des Kraftfahrzeugs, die ebenfalls erfindungsgemäß ausgewertet können.

Bevorzugt ist vorgesehen, dass in Abhängigkeit von der aktuellen Fahrsituation wenigstens eine bei einer gleichen oder ähnlichen Fahrsituation zuvor häufig gewählten Funktion ausgewählt und angezeigt wird. Die Häufigkeit des Auswählens einer bestimmten Funktion in Abhängigkeit von einer Fahrsituation stellt die einfachste Möglichkeit dar, einen Zusammenhang zwischen Fahrsituation und ausgewählter Funktion zu ermitteln. Dies ist ohne großen Rechenaufwand und in kurzer Zeit möglich.

Gemäß einer vorteilhaften Weiterbildung der Erfindung ist vorgesehen, dass der Zusammenhang mittels statistischer Verfahren ermittelt wird. Insbesondere ist vorgesehen, dass der Zusammenhang mittels einer Korrelationsanalyse ermittelt wird. Durch die statistische Auswertung der erfassten Daten lässt sich ein einfacher Zusammenhang zwischen ausgewählten Funktionen und Fahrsituationen erfassen.

Gemäß einer vorteilhaften Weiterbildung der Erfindung ist vorgesehen, dass zum Bestimmen der aktuellen Fahrsituation Situationswerte eines Navigationssystems, einer Umfeldsensorik und/oder einer Fahrzeugsensorik des Fahrzeugs erfasst werden. Die Situationswerte betreffen dabei beispielsweise durch die Umfeldsensorik gelieferte Temperatur- beziehungsweise Witterungsdaten, oder von der Fahrzeugsensorik bereitgestellte Daten, die beispielsweise den Geräuschpegel im Innenraum des Fahrzeugs oder den Müdigkeitszustand des Fahrers berücksichtigen. Durch das Navigationssystem können durch Erfassen der gefahrenen Strecken Situationswerte bereitgestellt werden, die beispielsweise erkennen lassen, ob das Fahrzeug entlang einer insbesondere dem Fahrer bekannten oder unbekannten Strecke geführt wird. Wird beispielsweise ermittelt, dass sich das Fahrzeug entlang einer unbekannten Strecke bewegt, kann automatisch als zur Verfügung stehende Funktion die Aktivierung des Navigationssystems oder beispielsweise die Eingabe einer Zieladresse angezeigt werden.

Vorzugsweise wird die ausgewählte Funktion in Abhängigkeit von dem Benutzer, insbesondere von dem Fahrer, gespeichert. Verschiedene Benutzer können beispielsweise durch benutzerindividuelle Fahrzeugschlüssel ermittelt werden. Auch ist es denkbar, dass die Fahrzeugsensorik eine Innenraumkamera aufweist, die das Fahrergesicht erfasst und dadurch auf einen bestimmten, beispielsweise zuvor im System hinterlegten Fahrer, erkennen kann.

Die erfindungsgemäße Vorrichtung zum Betreiben eines Fahrzeugs mit den Merkmalen des Anspruchs 7 zeichnet sich durch Mittel zur Durchführung des erfindungsgemäßen Verfahrens aus. Die Mittel weisen bevorzugt eine Datenbank und einen Prozessor auf, wobei in der Datenbank die zuvor genannten Daten und Werte hinterlegt werden. Der Prozessor oder Mikrocomputer wertet die Daten gemäß des erfindungsgemäßen Verfahrens aus. Die Mittel können weiterhin ein Statistikmodul umfassen, welches die Daten der Datenbank statistisch auswertet. Weiterhin ist bevorzugt als Mittel ein Vorschlagsgenerierungsmodul vorgesehen, das in Abhängigkeit der von dem Statistikmodul ermittelten Zusammenhänge und einer aktuellen Fahrsituation die anzuzeigende zur Verfügung stehende Funktion auswählt. Weiterhin weisen die Mittel bevorzugt eine Eingabeeinrichtung auf, mittels welcher der Fahrer letztendlich die Möglichkeit hat, eine oder mehrere der ausgewählten und angezeigten Funktionen zu betätigen beziehungsweise zu aktivieren.

Das erfindungsgemäße Computerprogramm mit den Merkmalen des Anspruchs 8 sieht vor, dass alle Schritte des erfindungsgemäßen Verfahrens ausgeführt werden, wenn es auf einem Computer abläuft.

Das erfindungsgemäße Computer-Programmprodukt, mit den Merkmalen des Anspruchs 9, mit einem auf einem maschinenlesbaren Träger gespeicherten Programmcode führt das erfindungsgemäße Verfahren aus, wenn das Programm auf einem Computer abläuft.

Im Folgenden soll die Erfindung anhand der Zeichnung näher erläutert werden. Dazu zeigen
Figur 1 eine vereinfachte Mittelkonsole eines Kraftfahrzeugs,
Figur 2 eine vereinfachte Darstellung eines Verfahrens zum Betreiben des Kraftfahrzeugs und
Figur 3 ein Ausführungsbeispiel des Verfahrens.

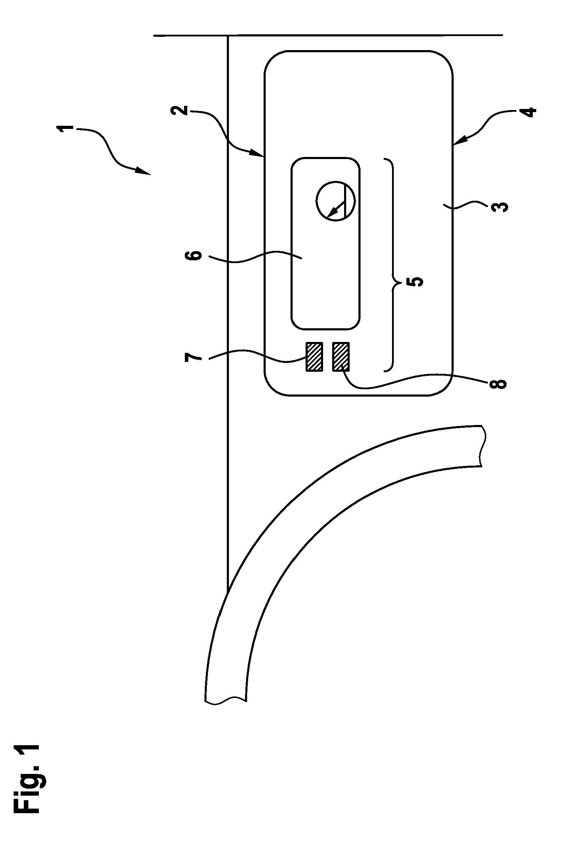

Figur 1 zeigt in einer vereinfachten Darstellung den Blick auf eine Mittelkonsole 1 eines nur angedeuteten Kraftfahrzeugs. In der Mittelkonsole 1 ist eine Anzeigeeinrichtung 2 vorgesehen, die einen Bildschirm 3 zum Darstellen von Informationen aufweist. Der Bildschirm 3 ist als berührungsempfindlicher Bildschirm beziehungsweise als Touchscreen ausgebildet, so dass die Anzeigeeinrichtung 2 gleichzeitig eine Eingabeeinrichtung 4 bildet.

Vorliegend zeigt die Anzeigeeinrichtung 2 einen Vorschlag 5 einer ausgewählten Funktion 6 an. Bei der Funktion 6 handelt es sich vorliegend um einen Tempomaten des Kraftfahrzeugs. Links daneben befinden sich zwei Auswahlfelder 7 und 8, mittels welcher ein Benutzer durch Berühren des Bildschirms 3 den Vorschlag 5 zur Aktivierung des Tempomaten annehmen (Feld 7) oder ablehnen (Feld 8) kann.

Der Vorschlag zum Aktivieren des Tempomaten wurde in Abhängigkeit von der aktuellen Fahrsituation ausgewählt und angezeigt. Zuvor wurde ermittelt, dass derselbe Fahrer stets nach einer bestimmen Fahrdauer bei einer zumindest annähernd konstanten Geschwindigkeit den Tempomaten aktiviert hat. Nunmehr wurde erkannt, dass der Fahrer wiederum mit annähernd konstanter Geschwindigkeit unterwegs war, den Tempomat bisher noch nicht aktivierte. Daher wird nun automatisch die Funktion des Tempomaten mittels der Anzeigeeinrichtung 2 angezeigt.

Das diesem Vorgehen zugrunde liegende Verfahren soll im Folgenden näher erläutert werden.

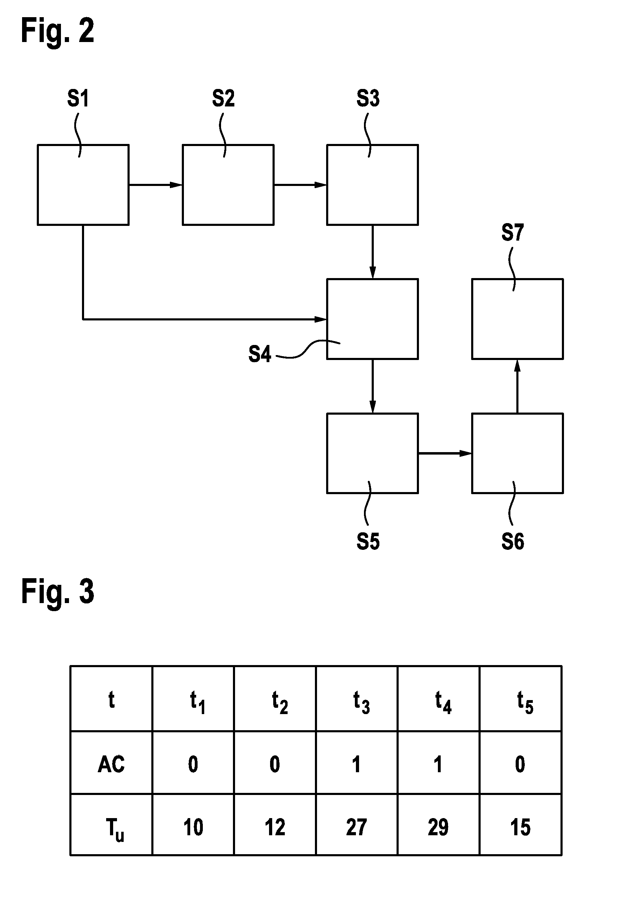

Figur 2 zeigt hierzu in einem Blockdiagramm mehrere Schritte des Verfahrens. Zunächst wird in einem ersten Schritt S1 eine aktuelle Fahrsituation des Kraftfahrzeugs erfasst. Hierzu werden mittels einer Fahrzeugsensorik, einer Umfeldsensorik und/oder eines Navigationssystems Situationswerte, die die aktuelle Fahrsituation betreffen, erfasst. Gleichzeitig werden von dem Fahrer ausgelöste Funktionen erfasst und in Abhängigkeit von der aktuellen Fahrsituation beziehungsweise zusammen mit einer Beschreibung der aktuellen Fahrsituation in einem Schritt S2 in einer Datenbank gespeichert beziehungsweise hinterlegt. In einem Schritt S3 werden die Daten dieser Datenbank statistisch ausgewertet, um einen Zusammenhang zwischen den Fahrsituationen und den ausgewählten Funktionen zu ermitteln. Anschließend wird in einem Schritt S4 auf Basis einer aktuell erfassten Fahrsituation und den aus Schritt S3 bekannten Zusammenhängen zwischen aktuellen Fahrsituationen und ausgewählten Funktionen ein Vorschlag beziehungsweise die Vorauswahl einer Funktion getroffen, die der Fahrer oder Benutzer des Kraftfahrzeugs erfahrungsgemäß in einer derartigen Fahrsituation ausgewählt hat. Es wird sozusagen antizipiert, welche Funktion der Fahrer in dieser Fahrsituation auslösen möchte. Die Funktion wird in einem darauffolgenden Schritt S5 mittels der Anzeigeeinrichtung 2 dem Fahrer, in diesem Fall visuell, angezeigt. Durch die Eingabeeinrichtung 4 beziehungsweise mittels des Touchscreens kann der Fahrer im darauffolgenden Schritt S6 die vorgeschlagene Funktion annehmen (Feld 7) oder ablehnen (Feld 8). Im Fall der Annahme wird die Funktion in einem Schritt S7 ausgeführt. Dabei werden die einzelnen Verfahrensschritte bevorzugt durch ein speziell dafür hergerichtetes Steuergerät durchgeführt.

Dieses System bietet dem Fahrer oder dem Beifahrer schnelle Zugriffe auf Fahrzeugfunktionen, die in der aktuellen Fahrsituation benötigt werden. Um dem Fahrer die Funktionen zur richtigen Zeit anbieten zu können, erstellt das System eine Statistik (S3) darüber, wann, wo und in welcher Situation der Fahrer welche Funktionen nutzt. Zum Beispiel könnte das System über die Anzeigeeinrichtung 2 vorschlagen, das Radio einzuschalten, sobald das Fahrzeug dichten Stadtverkehr verlassen hat und die Fahrsituation entspannter ist. Zuvor hat das System gelernt, dass der Fahrer das Radio erst in dieser entspannten Situation einschaltet. Der Fahrer kann durch das Betätigen der Eingabeeinrichtung 4, oder alternativ durch eine separate Taste, Gestikeingabe oder dergleichen, oder auch per Sprachbefehl, den Vorschlag annehmen oder ablehnen. Vorteilhafterweise wird hierbei auch der elektronische Horizont ausgewertet, um auch die erwartete zukünftige Fahrsituation bei der Auswahl der Funktionen beziehungsweise der Vorschläge berücksichtigen zu können. Hierfür wird der elektronische Horizont vorteilhafterweise um einige Attribute erweitert. Unter dem elektronischen Horizont ist ein Modell zu verstehen, mit dem digitale Kartendaten in der Umgebung des Fahrzeugs repräsentiert werden, insbesondere auch die Attribute des Weges, den der Fahrer voraussichtlich wählen wird. Beispiele für solche Attribute sind die erlaubte Geschwindigkeit und/oder die Straßenkrümmung auf dem aktuellen und/oder auf dem vorausliegenden Streckenabschnitt.

Durch das explizite Anbieten der vom Fahrer wahrscheinlich gewünschten Funktion wird der Fahrer entlastet und der Fahrkomfort erhöht. Bei entsprechender Gestaltung der Eingabeeinrichtung 4 kann der Fahrer die Aktivierungsfunktion betätigen, ohne seinen Blick von der Fahrbahn abwenden zu müssen.

Das beschriebene Verfahren kann von dem Fahrer bevorzugt jederzeit deaktiviert werden, so dass bis zur erneuten Aktivierung keine Vorschläge unterbreitet beziehungsweise ausgewählte Funktionen angezeigt werden. Die zum Durchführen des Verfahrens notwendige Vorrichtung weist vorteilhafterweise die bereits genannte Datenbank zur Protokollierung von relevanten Parametern, ein Statistikmodul zur Auswertung der protokollierten Parameter (S3), ein Modul zur Generierung von Vorschlägen anhand der Statistik (S4), eine Fahrerzustandserkennung, die Anzeigeeinrichtung 2 für die vorgeschlagenen Funktionen sowie die Eingabeeinrichtung 4 zum Auswählen beziehungsweise Aktivieren der vorgeschlagenen Funktionen durch den Fahrer auf.

In der Datenbank wird bevorzugt während jeder Fahrt abgespeichert, welche Funktionen der Fahrer in welcher Fahrsituation nutzt. Die Fahrsituation wird durch verschiedene Parameter repräsentiert. Beispiele solcher Parameter sind die Uhrzeit, das Datum, der Wochentag, die seit Beginn der Fahrt verstrichene Zeit, die seit Beginn der Fahrt zurückgelegte Strecke, die Geschwindigkeit, die Geschwindigkeitsvarianz innerhalb einer vorgebbaren Zeitspanne, die Außenoder Innentemperatur, die Luftfeuchtigkeit, die Witterung, wie beispielsweise Regen, Schnee, Glatteis oder dergleichen, die geografische Position des Fahrzeugs, beispielsweise in einer digitalen Karte, die Anzahl und Intensität der Brems- oder Beschleunigungsvorgänge innerhalb einer vorgebbaren Zeit, der Bekanntheitsgrad der Strecke beim Fahrer, der sich beispielsweise durch die Häufigkeit der befahrenen Strecke ergibt, die Nähe des Fahrzeugs zu Orten von Interesse (POI = Points of Interest) einer bestimmten Kategorie, die Nähe zu bestimmten Verkehrsinfrastrukturen, wie Autobahn, Wohngebiet, oder Landstraße, ob sich ein Beifahrer an Bord befindet, die Gesprächsaktivität, falls ein Beifahrer an Bord ist, die beispielsweise mit einem Innenraummikrofon und einem System zur automatischen Stimmanalyse erfasst werden kann, die Ergebnisse der Fahrerzustandserkennung, beispielsweise bezüglich der Müdigkeit des Fahrers, die Aktivität eines Navigationssystems, die Länge der im Navigationssystem geplanten Route und/oder Attribute des elektronischen Horizonts.

Diese Parameter werden im Folgenden als Situationswerte bezeichnet. Die Erfassung der Situationswerte kann durch die Fahrzeugsensorik, insbesondere Umfeldkamera und Innenraumkamera, erfolgen. Die Situationswerte und der Status der Fahrzeugfunktionen werden in regelmäßigen zeitlichen Abständen, zum Beispiel einmal pro Minute, abgespeichert. Außerdem werden alle Situationswerte abgespeichert, wenn eine Funktion durch den Fahrer aktiviert wird, also wenn sich der Status einer Funktion ändert. Die Protokollierung und Auswertung erfolgt bevorzugt separat für verschiedene Fahrer. Dabei wird vorausgesetzt, dass im Fahrzeug ein System vorhanden ist, mit dem verschiedene Fahrer voneinander unterschieden werden können.

Um komplexe Situationen erfassen zu können, werden bevorzugt kombinierte Situationswerte definiert. Ein solcher kombinierter Situationswert ist eine Kombination von mehreren einfachen Situationswerten. Der kombinierte Situationswert für die Situation "entspannte Fahrsituation" kann beispielsweise in Abhängigkeit von der Nähe des Fahrzeugs zu bebautem Gebiet und/oder Verkehrsstörungen, der Kurvigkeit und/oder Anzahl von Verkehrsschildern auf dem voraussichtlich gewählten Weg, dem Bekanntheitsgrad der Strecke beim Fahrer sowie der aktuellen Witterung definiert werden. Hierzu werden insbesondere die Situationswerte mittels des Navigationssystems und der Umfeldsensorik erfasst. Der Bekanntheitsgrad der Strecke ergibt sich aus Fahrdatenaufzeichnungen und die Kurvigkeit und Anzahl der Verkehrsschilder auf dem voraussichtlichen Weg beispielsweise aus dem elektronischen Horizont. Der kombinierte Situationswert wird so definiert, dass der Funktionswert umso größer wird je entspannter die Fahrsituation ist. Beispielsweise wird der Funktionswert größer, wenn sich das Fahrzeug von einem bebauten Gebiet entfernt.

Das Statistikmodul dient dem Zweck, einen Zusammenhang zwischen der Nutzung der Fahrzeugfunktion und einer Fahrsituation herzustellen. So soll zum Beispiel erkannt werden, wenn der Fahrer das Radio immer erst dann einschaltet, wenn eine entspannte Verkehrssituation vorliegt. Voraussetzung für die Auswertung ist, dass bereits ausreichend viele Fahrten protokolliert und in der Datenbank abgelegt wurden. Die Auswertung der protokollierten Daten erfolgt bevorzugt über ein entsprechendes statistisches Verfahren, wie beispielsweise über eine Korrelationsanalyse nach Pearson. Es können auch komplexere Verfahren zur Korrelationsanalyse eingesetzt werden, um nichtlineare Zusammenhänge zu erkennen und um die Robustheit gegenüber statistischen Ausreißern zu erhöhen.

Um den Zusammenhang zwischen der Nutzung einer Funktion und einer Fahrsituation herzustellen, werden sowohl die Nutzung der Funktion als auch der die Fahrsituation beschreibende Situationswert als Zufallsvariablen aufgefasst. Der Korrelationskoeffizient nach Pearson der beiden Zufallsvariablen lässt darauf schließen, dass ein linearer statistischer Zusammenhang zwischen der Funktion und dem Situationswert besteht. Auch ein gegensinniger Zusammenhang wird anhand des Korrelationskoeffizienten erkannt. Es werden die Korrelationskoeffizienten für jede Funktion mit jedem Situationswert berechnet, um möglichst viele Zusammenhänge zu erkennen. Wenn der Korrelationskoeffizient für die Kombination von Funktion A mit dem Situationswert B einen definierten Schwellenwert überschreitet (beispielsweise 0,9) und ausreichend viele Werte für A und B vorliegen (beispielsweise 30) dann wird angenommen, dass die Korrelation zwischen den beiden Werten groß genug ist, um eine automatische Aktivierung der Funktion vorzuschlagen, sobald B einen entsprechenden Wert annimmt. Dieser Wert wird zum Beispiel als Durchschnittswert der Werte bestimmt, die B jeweils dann angenommen hat, wenn die Funktion A vom Fahrer aktiviert wurde. Grundsätzlich ist die Korrelationsanalyse nach Pearson bekannt, so dass an dieser Stelle nicht näher darauf eingegangen werden soll. In dem Statistikmodul wird bevorzugt außerdem ausgewertet, in welcher Reihenfolge der Fahrer die Funktionen in einer bestimmten Fahrsituation nutzt.

Das Modul zur Vorschlagsgenerierung nutzt die Auswertung der Statistik, die aktuellen Situationswerte, auch bezüglich des Fahrerzustands, um die Aktivierung von Funktionen vorzuschlagen, die der Fahrer in der jeweiligen Situation mit hoher Wahrscheinlichkeit nutzen möchte. Angenommen, die Auswertung der Statistik hat ergeben, dass der Fahrer das Radio einschaltet, sobald eine entspannte Verkehrssituation vorliegt, dann wird dem Fahrer die entsprechende Funktion angeboten, sobald anhand der aktuellen Situationswerte erkannt wird, dass die Verkehrssituation entspannt ist, beispielsweise anhand des kombinierten Situationswertes "entspannte Fahrsituation" wie oben beschrieben. Außerdem wird die Fahrerzustandserkennung genutzt, um Funktionen mit hoher Nutzungswahrscheinlichkeit zu bestimmen. Wenn zum Beispiel erkannt wird, dass der Fahrer müde ist, wird ihm bevorzugt eine Erhöhung der Frischluftzufuhr vorgeschlagen.

Im Folgenden wird ein Ausführungsbeispiel für die Herstellung eines Zusammenhangs zwischen der Außentemperatur und der Nutzung der Klimaanlage anhand der in Figur 3 dargestellten Tabelle vorgestellt. Es wird angenommen, dass zu fünf verschiedenen Zeitpunkten t als Funktionswert die Außentemperatur T_{U} und als Funktion der Zustand AC einer Klimaanlage aufgezeichnet wurden. Ist die Klimaanlage deaktiviert, ergibt sich für AC der Wert 0, ist sie aktiviert, ergibt sich der Wert 1.

Der Korrelationskoeffizient über die fünf Werte beträgt 0,98, d.h. es gibt einen starken linearen Zusammenhang zwischen der Außentemperatur T_{U} und der Nutzung der Klimaanlage AC. Der Mittelwert der Außentemperatur T_{U} zu den beiden Zeitpunkten t₃ und t₄, an denen die Klimaanlage aktiviert war (AC = 1), beträgt 28 °C. In diesem Beispiel würde dem Fahrer immer dann, wenn die Temperatur 28 °C erreicht, die Aktivierung der Klimaanlage vorgeschlagen werden. Selbstverständlich ist es auch denkbar, das beschrieben Modell darauf zu erweitern, dass nicht nur eine einfache An-/Aus-Regelung durchgeführt wird, sondern dass die eingestellte Innenraumtemperatur beispielsweise in Abhängigkeit von einer Außentemperatur vorgeschlagen wird.

Es kann vorkommen, dass zum gleichen Zeitpunkt mehrere Funktionen eine hohe Nutzungswahrscheinlichkeit aufweisen, zum Beispiel, wenn der Fahrer in das Fahrzeug einsteigt. In diesem Fall wird die Statistik über die Reihenfolge der Funktionsnutzung herangezogen, um die Vorschläge zu priorisieren. Falls die Aktivierung der aktuell vorgeschlagenen Funktion über eine Taste erfolgt, muss der Fahrer diese im Idealfall bei seinem Einstieg ins Fahrzeug nur einige Male hintereinander betätigen, um alle von ihm gewünschten Funktionen in der richtigen Reihenfolge zu aktivieren.

Bei einigen Funktionen hängt die Qualität der Vorschlagsgenerierung maßgeblich von der Menge der im Statistikmodul ausgewerteten Daten ab. Andere Funktionen können auch angeboten werden, ohne dass vorher eine umfangreiche Statistik erstellt werden muss. Die Vorschlagsfunktion kann für solche Funktionen auch dann schon genutzt werden, wenn der Fahrer das Fahrzeug mit dem beschriebenen System noch nicht häufig benutzt hat. Im Folgenden werden Beispiele für anzubietende Funktionen beschrieben.

Die Funktion "Radio einschalten" wird sowohl statistisch als auch fahrsituationsbedingt angezeigt, beispielsweise bei Erfassen einer entspannten Verkehrssituation oder mit Beginn der 9-Uhr-Nachrichten.

Die Funktion "Radio ausschalten/Lautstärke reduzieren" wird bevorzugt in Abhängigkeit von der aktuellen Fahrsituation angezeigt, wenn beispielsweise eine intensive Unterhaltung zwischen Fahrer und Beifahrer des Fahrzeugs oder bei erhöhtem Verkehrsaufkommen bei unbekannter Strecke erfasst wird.

Die Funktion "Tempomat" beziehungsweise ACC (Adaptive Cruise Control = Abstandsregeltempomat) aktivieren" wird in Abhängigkeit von der aktuellen Fahrsituation angezeigt, wenn beispielsweise das Fahrzeug seit zehn Minuten mit geringer Geschwindigkeitsvarianz fährt oder gemäß elektronischem Horizont für mindestens zehn weitere Minuten auf einer Strecke bleibt, die eine geringe Geschwindigkeitsvarianz aufweist.

Die Funktion "Frischluftzufuhr erhöhen" wird beispielsweise dann angezeigt, wenn erfasst wurde, dass der Fahrer müde ist. Insofern bezieht sich dieser Vorschlag auf die aktuelle Fahrsituation, insbesondere auf den Fahrerzustandwert.

Die Funktion "Zieleingabe des Navigationssystems aktivieren" wird statistisch bevorzugt bei Erfassen des Starts des Fahrzeugs auf einer nie oder selten befahrenen Strecke angezeigt.

Die Funktion "Zielführung der Navigation beenden" wird dann angezeigt, wenn das Fahrzeug eine häufig befahrene Strecke erreicht. Hier erfolgt die Entscheidung zur Anzeige der ausgewählten Funktion bevorzugt auf statistischen Werten.

Die Funktion "Aktivierung der Klimaanlage/Fenster öffnen" kann sowohl statistisch als auch fahrsituationsbedingt angezeigt werden, beispielsweise, wenn die Außen- und/oder Innentemperatur oder die Luftfeuchtigkeit bestimmte Grenzwerte über- oder unterschreiten.

Die Funktion "Anzeige einer vom Fahrer oft genutzten Homepage im Web Browser" wird beispielsweise bei Pausen auf Autobahnraststätten vorgeschlagen. Dies kann statistisch ausgewertet werden, muss jedoch nicht.

Die Funktion "Anzeigen der Wettervorhersage für das im Navigationssystem eingestellte Ziel im Web Browser" wird beispielsweise bei Pausen auf Autobahnraststätten angezeigt.

Während bei dem beschriebenen Ausführungsbeispiel die Anzeigeeinrichtung als Bildschirm 3 ausgebildet ist, ist es auch denkbar, die Anzeigeeinrichtung 2 als Head-Up-Display auszubilden oder in einem Zentraldisplay, beispielsweise im Kombünstrument des Kraftfahrzeugs vorzusehen beziehungsweise zu integrieren. Auch ist es denkbar, die vorgeschlagenen Funktionen dem Fahrer nicht visuell, sondern akustisch, beispielsweise durch Sprachausgabe, mitzuteilen. Um einen Vorschlag anzunehmen, d.h. die entsprechende Funktion zu aktivieren, nutzt der Fahrer die Eingabeeinrichtung 4. Als Eingabeeinrichtung 4, alternativ zu dem beschriebenen Touchscreen, kommen auch separate Tasten in Frage, die für den Fahrer gut erreichbar und eventuell direkt neben der Anzeigeeinrichtung 2 angeordnet sind, auf welcher der Vorschlag textuell oder grafisch dargestellt wird, oder mehrere Tasten, damit mehrere Vorschläge gleichzeitig unterbreitet werden und aktiviert oder abgelehnt werden können. Auch eine Auswahl beziehungsweise Aktivierung per Spracheingabe ist denkbar.

## Patentansprüche

1. Verfahren zum Betreiben eines Fahrzeugs, insbesondere Kraftfahrzeugs, das wenigstens eine Anzeigeeinrichtung (2) zum visuellen oder akustischen Anzeigen wenigstens einer von einem Benutzer auswählbaren Funktion des Fahrzeugs aufweist, mit folgenden Schritten:
- Erfassen mehrerer von dem Benutzer ausgewählten Funktionen,
- Erfassen einer bei Auswahl der jeweiligen Funktion vorliegenden aktuellen Fahrsituation des Fahrzeugs,
- Speichern der erfassten und ausgewählten Funktionen in Abhängigkeit von der jeweiligen Fahrsituation,
- Ermitteln eines Zusammenhangs zwischen wenigstens einer Fahrsituation und den gespeicherten und ausgewählten Funktionen,
- Anzeigen der wenigstens einen auswählbaren Funktion in Abhängigkeit von der aktuellen Fahrsituation und des ermittelten Zusammenhangs.

2. Verfahren nach Anspruch 1, **dadurch gekennzeichnet, dass** in Abhängigkeit von der aktuellen Fahrsituation wenigstens eine bei einer gleichen oder ähnlichen Fahrsituation zuvor häufig gewählte Funktion angezeigt wird.

3. Verfahren nach einem der vorhergehenden Ansprüche, **dadurch gekennzeichnet, dass** der Zusammenhang mittels statistischer Verfahren ermittelt wird.

4. Verfahren nach einem der vorhergehenden Ansprüche, **dadurch gekennzeichnet, dass** der Zusammenhang mittels einer Korrelationsanalyse ermittelt wird.

5. Verfahren nach einem der vorhergehenden Ansprüche, **dadurch gekennzeichnet, dass** zum Bestimmen der aktuellen Fahrsituation Situationswerte eines Navigationssystems, einer Umfeldsensorik und/oder einer Fahrzeugsensorik erfasst werden.

6. Verfahren nach einem der vorhergehenden Ansprüche, **dadurch gekennzeichnet, dass** die ausgewählte Funktion in Abhängigkeit von dem Benutzer gespeichert und angezeigt wird.

7. Vorrichtung zum Betreiben eines Fahrzeugs, insbesondere Kraftfahrzeugs, **dadurch gekennzeichnet, dass** ein speziell hergerichtetes Steuergerät vorgesehen ist, das Mittel zur Durchführung des Verfahrens nach einem der Ansprüche 1 bis 6 aufweist.

8. Computerprogramm, das alle Schritte eines Verfahrens nach einem der Ansprüche 1 bis 6 ausführt, wenn das Programm auf eine Computer läuft.

9. Computer-Programmprodukt mit einem auf einem maschinenlesbaren Träger gespeicherten Programmcode zur Durchführung des Verfahrens nach einem der Ansprüche 1 bis 6, wenn das Programm auf einem Computer ausgeführt wird.
